(19)

Europäisches Patentamt

European Patent Office

Office européen des brevets

(11) **EP 4 703 078 A1**

(12) **EUROPEAN PATENT APPLICATION**
published in accordance with Art. 153(4) EPC

(43) Date of publication:
04.03.2026  Bulletin 2026/10

(21) Application number: 23963060.1

(22) Date of filing: 26.12.2023

(51) International Patent Classification (IPC):
**B23K 26/00** $^{(2014.01)}$

(52) Cooperative Patent Classification (CPC):
B23K 26/00

(86) International application number:
PCT/JP2023/046693

(87) International publication number:
WO 2025/141706 (03.07.2025 Gazette 2025/27)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Yamazaki Mazak Corporation**
**Niwa-gun, Aichi 480-0197 (JP)**

(72) Inventors:
• ITO, Nobuhiro
Niwa-gun, Aichi 480-0197 (JP)
• TOMIDA, Tatsuya
Niwa-gun, Aichi 480-0197 (JP)
• MATSUOKA, Satoshi
Niwa-gun, Aichi 480-0197 (JP)

(74) Representative: **TBK**
**Bavariaring 4-6**
**80336 München (DE)**

(54) **LASER PROCESSING METHOD, LASER PROCESSING MACHINE, PROGRAM, AND COMPUTER-READABLE MEDIUM**

(57)     A laser beam machining method includes performing a machining process including machining a workpiece by irradiating the workpiece with a laser beam from a nozzle, and performing a standby process including suspending output of the laser beam. The standby process starts when a cumulative time of the machining process without the standby process interposed between the machining processes exceeds a threshold time that is predetermined.

FIG. 9

START

ST1 Start laser oscillator

ST2 Set threshold time

ST3 Perform machining process

ST4 Machining process completed? — YES

NO

ST5 Cumulative time > Threshold time — NO

YES

ST6 Start standby process

ST7 Store stop position as target resuming position

ST8 Set standby time

ST9 Change position of laser nozzle to standby position

ST10 Elapsed time ≧ Standby time — NO

YES

ST11 Move laser nozzle to target resuming position

ST12 Restart laser oscillator

END

EP 4 703 078 A1

## Description

Technical Field

The present invention relates to a laser beam machining method, a laser beam machine, a program, and a computer-readable medium.

Background Art

In laser beam machining, the temperature of the nozzle increases due to laser irradiation, and the nozzle thermally expands to change the relationship between the distance between the nozzle and the workpiece and the capacitance, which may adversely affect machining. In order to prevent this, a method has been proposed in which a flow path for flowing cooling water is provided in the nozzle, and the cooling water is made to flow during machining, thereby suppressing the temperature rise (for example, Patent Document 1). As another method, a method of suppressing absorption of the laser beam and suppressing a temperature rise by applying metal plating (for example, gold plating or nickel chromium plating) having a high reflectance with respect to the laser to a mount portion of the laser condensing lens or a lower surface thereof has been proposed (for example, Patent Document 2).

Prior Art Document

[Patent Document]

Patent Document 1: Japanese Unexamined Utility Model Publication No. H02-006185

[Patent Document 2] Japanese Patent No. 4812172

SUMMARY OF THE INVENTION

Problems to be Solved by the Invention

In recent years, the output of the laser beam has been increased, and even if the above-described method is applied, it is difficult to sufficiently suppress the temperature rise of the nozzle, and it is difficult to stably perform continuous processing.
An object of the technique disclosed in the present application is to provide a laser beam machining method, a laser beam machine, a program, and a computer-readable medium capable of effectively cooling a nozzle and stably performing continuous machining even when the output of the laser beam is increased.

Means for Solving the Problems

According to one aspect of the present disclosure, a laser beam machining method includes performing a machining process including machining a workpiece by irradiating the workpiece with the laser beam from a nozzle, and performing a standby process including suspending output of the laser beam. The standby process starts when a cumulative time of the machining process without the standby process interposed between the machining processes exceeds a threshold time is predetermined.
According to a second aspect of the present disclosure, in the laser beam machining method according to the first aspect, the machining process includes irradiating the laser beam through a through hole of the nozzle plated with gold,.
According to a third aspect of the present disclosure, in the laser beam machining method according to the first or second aspect, the threshold time is determined based on an output intensity of the laser beam and a ratio of an opening diameter of a tip of the nozzle to a diameter at which an output density of the laser beam exceeds a predetermined threshold value in the nozzle.
According to a fourth aspect of the present disclosure, in the laser beam machining method according to any one of the first to third aspects, the standby process is performed during a standby time corresponding to a degree to which the nozzle is heated in the machining process.
According to a fifth aspect of the present disclosure, in the laser beam machining method according to the fourth aspect, the standby time is determined based on an output intensity of the laser beam, the cumulative time, a ratio of an opening diameter of a tip of the nozzle to a diameter at which an output density of the laser beam exceeds a predetermined threshold value in the nozzle.

According to a sixth aspect of the present disclosure, in the laser beam machining method according to any one of the first to fifth aspects, the standby process further includes storing, as a target resuming position, a position of the nozzle immediately after the machining process is switched to the standby process. The standby process further includes changing the position of the nozzle to a standby position apart from the target resuming position. The machining process further includes returning the position of the nozzle from the standby position to the target resuming position. Please note that the standby position is preferably a position spaced upward from the target resuming position, a position spaced horizontally from the workpiece, or a position spaced upward from the target resuming position and spaced horizontally from the workpiece.

According to a seventh aspect of the present disclosure, in the laser beam machining method according to the sixth aspect, the standby process further includes cooling the nozzle by the cooler provided at the standby position.

According to an eighth aspect of the present disclosure, in the laser beam machining method according to the sixth aspect or the seventh aspect, the machining process further includes performing piercing at a restart position deviated from the target resuming position and thereafter moving the nozzle to the target resuming position on starting the machining process.

According to a ninth aspect of the present disclosure, in the laser beam machining method according to the eighth aspect, the machining process further includes correcting the position of the nozzle based on one side of a left side and a right side at which a portion of the nozzle exists as viewed in the moving direction of the nozzle. The restart position is positioned at an opposite side to the one side with respect to the target resuming position.

According to a tenth aspect of the disclosure, in a laser beam machining method according to the nineth aspect, the one side is determined based on a code of a tool radius compensation of a machining program.

According to an eleventh aspect of the present disclosure, in the laser beam machining method according to any one of the first to tenth aspects, the machining process includes moving the nozzle to machine the workpiece in a machining unit defined in a machining program. The machining process is maintained until the nozzle passes a switching prohibition region that is within a predetermined distance from an end point of the machining unit, if the position of the nozzle is within the switching prohibition region when the cumulative time exceeds the threshold time, and the standby process starts after the nozzle passes the switching prohibition region.

According to a twelfth aspect of the disclosure, in the laser beam machining method according to any one of the first aspect to the eleventh aspect, the machining process and the standby process each further include cooling the nozzle by at least one of jetting assist gas from the nozzle and flowing a coolant through a nozzle cooling circuit provided in the nozzle.

According to a thirteenth aspect of the disclosure, a laser beam machine includes control circuitry configured to perform the laser beam machining method according to any one of the first to twelfth aspects, a laser oscillator configured to output the laser beam, a nozzle, and a transferring mechanism configured to move the nozzle.

According to a fourteenth aspect of the disclosure, a program includes instructions which, when the program is executed by a control circuitry of a laser beam machine, cause the control circuitry to carry out the laser beam machining method of any one of the first to twelfth aspects.

According to a fifteenth aspect of the present disclosure, a computer-readable medium includes instructions which, when executed by a control circuitry of a laser beam machine, cause the control circuitry to carry out the laser beam machining method of any one of the first to twelfth aspects.

In the laser beam machining method according to the first aspect, the laser beam machine according to the thirteenth aspect including control circuitry configured to carry out the laser beam machining method according to the first aspect, the program according to the fourteenth aspect includes instructions for causing the control circuitry to perform the laser beam machining method laser beam machining method according to the first aspect, and a computer-readable medium according to the fifteenth aspect comprising instructions for causing the control circuitry to perform the laser beam machining method according to the first aspect, since the standby process is started when the cumulative time of the machining process without the standby process interposed therebetween exceeds the predetermined threshold time, the nozzle can be cooled at a timing at which the temperature of the nozzle does not rise too much even in continuous laser beam machining, and stable and highly accurate laser beam machining can be realized.

In the laser beam machining method according to the second aspect, the laser beam machine according to the thirteenth aspect comprising the control circuitry configured to execute the laser beam machining method according to the second aspect, the program according to the fourteenth aspect comprising instructions for causing the control circuitry to execute the laser beam machining method laser beam machining method according to the second aspect, and the computer-readable medium according to the fifteenth aspect comprising instructions for causing the control circuitry to execute the laser beam machining method according to the second aspect, the gold plating prevents oxidation of the material of the nozzle. Therefore, the laser beam is prevented from being absorbed by the material of the nozzle, and the laser is reflected by the gold plating, so that the laser output does not change even after the nozzle is used for a long time.

In the laser beam machining method according to the third aspect, the laser beam machine according to the thirteenth aspect comprising the control circuitry configured to execute the laser beam machining method according to the third aspect, the program according to the fourteenth aspect comprising instructions to cause the control circuitry to execute the laser beam machining method according to the third aspect, and the computer-readable medium according to the fifteenth aspect comprising instructions to cause the control circuitry to execute the laser beam machining method according to the third aspect, the amount of heat absorbed by the nozzle is determined based on the output intensity of the laser beam, the ratio of the diameter of the opening hole at the tip of the nozzle to the diameter of the nozzle at which the output density of the laser beam exceeds the predetermined threshold, and the increased temperature of the nozzle. Thus, the laser beam machine can be controlled to start the standby process when the temperature of the nozzle exceeds the predetermined temperature.

The laser beam machining method according to the fourth aspect, the laser beam machine according to the thirteenth aspect comprising the control circuitry configured to execute the laser beam machining method according to the fourth aspect, the program according to the fourteenth aspect comprising instructions for causing the control circuitry to execute the laser beam machining method according to the fourth aspect, and the computer-readable medium according to the fifteenth aspect comprising instructions for causing the control circuitry to execute the laser beam machining method according to the fourth aspect, the nozzle is cooled during the standby time corresponding to the degree of heating of the nozzle, and the nozzle is cooled to a predetermined temperature or lower, so that stable and high-precision laser processing for a long time can be realized.

In the laser beam machining method according to the fifth aspect, the laser beam machine according to the thirteenth aspect comprising the control circuitry configured to execute the laser beam machining method according to the fifth aspect, the program according to the fourteenth aspect comprising instructions for causing the control circuitry to execute the laser beam machining method according to the fifth aspect, and the computer-readable medium according to the fifteenth aspect comprising instructions for causing the control circuitry to execute the laser beam machining method according to the fifth aspect, the increased temperature of the nozzle is determined based on the output intensity of the laser beam, the ratio of the diameter of the opening hole at the tip of the nozzle to the diameter of the nozzle at which the output density of the laser beam exceeds the predetermined threshold value, and the cumulative time. Thus, the standby time can be set to a time required for cooling the nozzle to a predetermined temperature or lower.

In the laser beam machining method according to the sixth aspect, the laser beam machine according to the thirteenth aspect including the control circuitry configured to execute the laser beam machining method according to the sixth aspect, the program according to the fourteenth aspect including the instruction to cause the control circuitry to execute the laser beam machining method according to the sixth aspect, and the computer-readable medium according to the fifteenth aspect including the instruction to cause the control circuitry to execute the laser beam machining method according to the sixth aspect, the nozzle can be prevented from receiving radiant heat due to heating of the workpiece by changing the position of the nozzle to the standby position away from the target resuming position in the standby process. As a result, the cooling efficiency of the nozzle is increased to shorten standby time.

In the laser beam machining method according to the seventh aspect, the laser beam machine according to the thirteenth aspect comprising the control circuitry configured to execute the laser beam machining method according to the seventh aspect, the program according to the fourteenth aspect comprising instructions for causing the control circuitry to execute the laser beam machining method according to the seventh aspect, and the computer-readable medium according to the fifteenth aspect comprising instructions for causing the control circuitry to execute the laser beam machining method according to the seventh aspect, the standby time can be reduced by cooling the nozzle by means of the cooler.

In the laser beam machining method according to the eighth aspect, the laser beam machine according to the thirteenth aspect comprising the control circuitry configured to execute the laser beam machining method according to the eighth aspect, the program according to the fourteenth aspect comprising instructions for causing the control circuitry to execute the laser beam machining method according to the eighth aspect, and the computer-readable medium according to the fifteenth aspect comprising instructions for causing the control circuitry to execute the laser beam machining method according to the eighth aspect, if processing is performed at the target resuming position at the start of the machining process, when the later output or the assist gas pressure is unstable, unnecessary heat generation may occur, potentially damaging the product surface, and the machining process, the machining quality on the surface of the product can be improved by piercing the nozzle at the restart position away from the target resuming position and then moving the nozzle to the target resuming position.

In the laser beam machining method according to the ninth aspect, the laser beam machine according to the thirteenth aspect comprising the control circuitry configured to execute the laser beam machining method according to the ninth aspect, the program according to the fourteenth aspect comprising instructions for causing the control circuitry to execute the laser beam machining method according to the ninth aspect, and the computer-readable medium according to the fifteenth aspect comprising instructions for causing the control circuitry to execute the laser beam machining method according to the ninth aspect, the restart position can be reliably set outside the product portion.

In the laser beam machining method according to the tenth aspect, the laser beam machine according to the thirteenth aspect comprising the control circuitry configured to execute the laser beam machining method according to the tenth aspect, the program according to the fourteenth aspect comprising instructions for causing the control circuitry to execute the laser beam machining method according to the tenth aspect, and the computer-readable medium according to the fifteenth aspect comprising instructions for causing the control circuitry to execute the laser beam machining method according to the tenth aspect use the EIA/ISO program code used for general purpose, and therefore, the laser beam machining method can be easily applied to many processing programs.

In the laser beam machining method according to the eleventh aspect, the laser beam machine according to the thirteenth aspect including the control circuitry configured to execute the laser beam machining method according to the eleventh aspect, the program according to the fourteenth aspect including instructions for causing the control circuitry to execute the laser beam machining method according to the eleventh aspect, and the computer-readable medium according to the fifteenth aspect comprising instructions for causing the control circuitry to execute the laser beam machining method according to the eleventh aspect, the machining process and the standby process can be switched to avoid a portion near the end point of the machining unit which is highly likely to constitute a corner of the product. Heat is likely to accumulate at the corner of the product, and when the machining process and the standby process are switched near the corner, the corner may burn through and cause a machining failure. Such a machining defect can be suppressed by switching between the machining process and the standby process while avoiding a portion near the end point of the machining unit.

In the laser beam machining method according to the twelfth aspect, the laser beam machine according to the thirteenth aspect including the control circuitry configured to execute the laser beam machining method according to the twelfth aspect, the program according to the fourteenth aspect including instructions for causing the control circuitry to execute the laser beam machining method according to the twelfth aspect, and the computer-readable medium according to the fifteenth aspect including instructions for causing the control circuitry to execute the laser beam machining method according to the twelfth aspect, the nozzle is cooled by the assist gas or the refrigerant even in the machining process, and thus it is possible to suppress an increase in the temperature of the nozzle during processing.

Effects of the Invention

According to the technique disclosed in the present application, the laser beam machining method, the laser beam machine, the program, and the computer-readable medium can be provided which can effectively cool the nozzle and stably perform continuous processing.

BRIEF DESCRIPTION OF DRAWINGS

FIG. 1 is a diagram showing an external configuration of a laser beam machine according to an embodiment.
FIG. 2 is a sectional view of a laser head of the laser beam machine according to the embodiment.
FIG. 3 is a sectional view taken along line III-III' in FIG. 2.
FIG. 4 is a diagram showing the internal structure of an optical fiber according to the embodiment.
FIG. 5 shows an example of an output of the laser beam according to the embodiment.
FIG. 6 is a schematic view of a laser beam ahead of the torch according to the embodiment.
FIG. 7 is an example of setting data.
FIG. 8 shows an example of the machining program for laser beam machining.
FIG. 9 is a flowchart of the laser beam machining method according to the first embodiment.
FIG. 10 shows an example of a movement path of the nozzle according to the first embodiment as viewed from the Z direction.
FIG. 11 shows an example of a movement path of the nozzle according to the first embodiment as viewed from the X direction.
FIG. 12 shows a modification of the movement path of the nozzle according to the first embodiment as viewed from the X direction.
FIG. 13 is a flowchart of a laser beam machining method according to the second embodiment.
FIG. 14 shows an example of a movement path of a nozzle according to the second embodiment as viewed from the Z direction.
FIG. 15 shows an example of a movement path of the nozzle according to the second embodiment as viewed from the Y direction.

DESCRIPTION OF THE EMBODIMENTS

The present invention will be described in detail below with reference to the drawings showing embodiments thereof. In the drawings, the same reference numerals denote corresponding or substantially the same components.

<First Embodiment>

<Configuration of Laser beam machining Device 1>

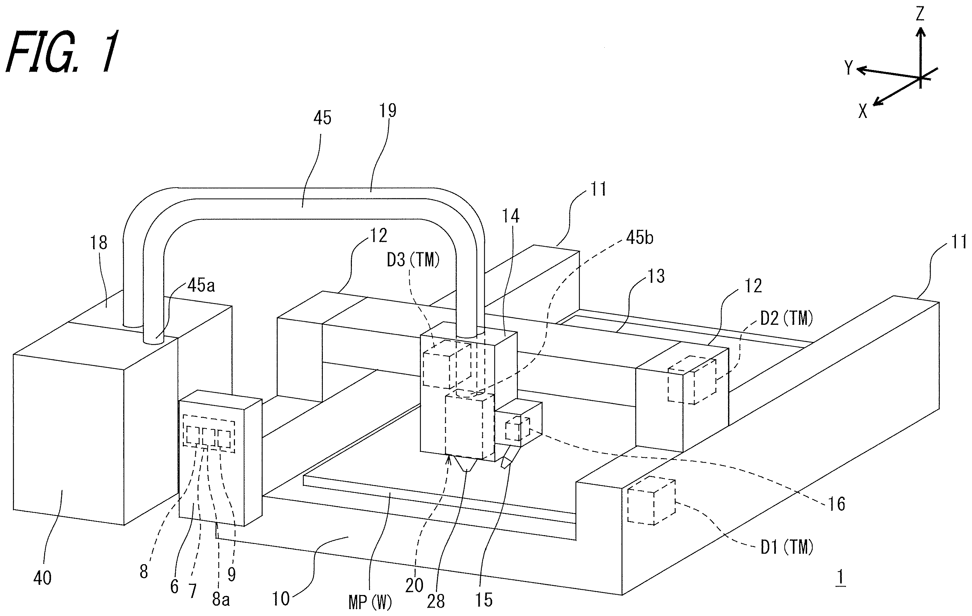

FIG. 1 is a schematic configuration diagram showing an external configuration of a laser beam machine 1 according to an embodiment of the present invention. The X axis shown in FIG. 1 is along the depth direction of the laser beam machine 1, the Y axis is along the width direction of the laser beam machine 1, and the Z axis is along the height direction of the laser beam machine 1. Hereinafter, directions along the X axis, the Y axis, and the Z axis are referred to as an X direction, a Y direction, and a Z direction, respectively. As shown in FIG. 1, the laser beam machine 1 includes base 10, a first guide rail 11, column 12, second guide rail 13, saddle 14, oil nozzle 15, first valve 16, laser head 20, a laser oscillator 40, an optical fiber 45, and a numerical control apparatus 6. The laser beam machine 1 is an apparatus for processing metal plate MP on the base 10. The metal plate MP is preferably mild steel, but may be SUS, aluminum steel, brass, or copper. The thickness of the metal plate MP is preferably 16 mm to 60 mm, but is not limited to this size. The metal plate MP may be referred to as a workpiece W. The base 10 has a plurality of elongated projections. A pair of first guide rails 11 extending along the X direction are attached to both ends of the base 10 in the Y direction, a column 12 is movably mounted on a first guide rail. The column 12, for example, moves on the first guide rail 11 by a driving force of a driving device D1 such as a motor provided on either the first guide rail 11 or the column 12.

A second guide rail 13 is provided on the column 12 along a Y axis orthogonal to the X axis, and a saddle 14 is attached to the column 12 so as to be movable in the Y direction. The saddle 14 moves on the second guide rail 13 by a driving force of a driving device D2 such as a motor provided on either the second guide rail 13 or the saddle 14, for example. Although not illustrated, the column 12 may be covered with a bellows-like cover. A laser head 20 is attached to the saddle 14 so as to be movable in a Z direction along a Z axis perpendicular to the X axis and the Y axis. The laser head 20 is moved on the saddle 14 by a driving force of a driving device D3 such as a motor provided in either the saddle 14 or the laser head 20. The laser head 20 is configured to process the metal plate MP on the base 10. The laser head 20 includes an optical system into which laser beam sent from a laser oscillator 40 is introduced. The optical system includes a collimation unit (not illustrated) for collimating the laser beam. The laser head 20 includes a laser nozzle 28 for laser beam machining. The laser nozzle 28 may be simply referred to as a nozzle.

The oil nozzle 15 is configured to inject oil to the workpiece W during piercing described later. The oil is stored in an oil tank (not illustrated). The first valve 16 is configured to adjust the amount of oil sent from a pump (not illustrated) to the oil nozzle 15. Although FIG. 1 shows an example in which the oil nozzle 15 and the first valve 16 are attached to the saddle 14, they may be attached to the base 10. The laser oscillator 40 is configured to output laser beam for processing the metal plate MP. The optical fiber 45 connects the laser oscillator 40 and the laser head 20 in an extensible manner in order to supply the laser beam output from the laser oscillator 40 to the laser head 20. The optical fiber 45 has a first end 45a that receives the laser beam from the laser oscillator 40 and a second end 45b opposite to the first end SL. The numerical control apparatus 6 includes control circuitry 7 including a hardware processor, a memory, and the like. The control circuitry 7 is configured to execute the control program 8 and the machining program 9 and control the laser oscillator 40, the driving devices D1 to D3, the first valve 16, and a second valve 17 and a third valve 37, which will be described later, so as to machine the metal plate MP. For example, the machining program 9 is described in EIA/ISO program code, and the control program 8 is a program that analyzes the program code of the machining program 9 and generates control signals for controlling the laser oscillator 40, the driving devices D1 to D3, the first valve 16, and a second valve 17 and a third valve 37, which will be described later, while referring to the setting data 8a. The setting data 8a describes outputs to the laser oscillator 40, the driving devices D1 to D3, the first valve 16, and a second valve 17 and a third valve 37 described later, corresponding to the respective parameters of the code of the machining program 9. The control program 8 is, for example, a library. In the following embodiments, the driving devices D1 to D3 are collectively referred to as a transferring mechanism called TM. The transferring mechanism TM is configured to move the laser nozzle 28.

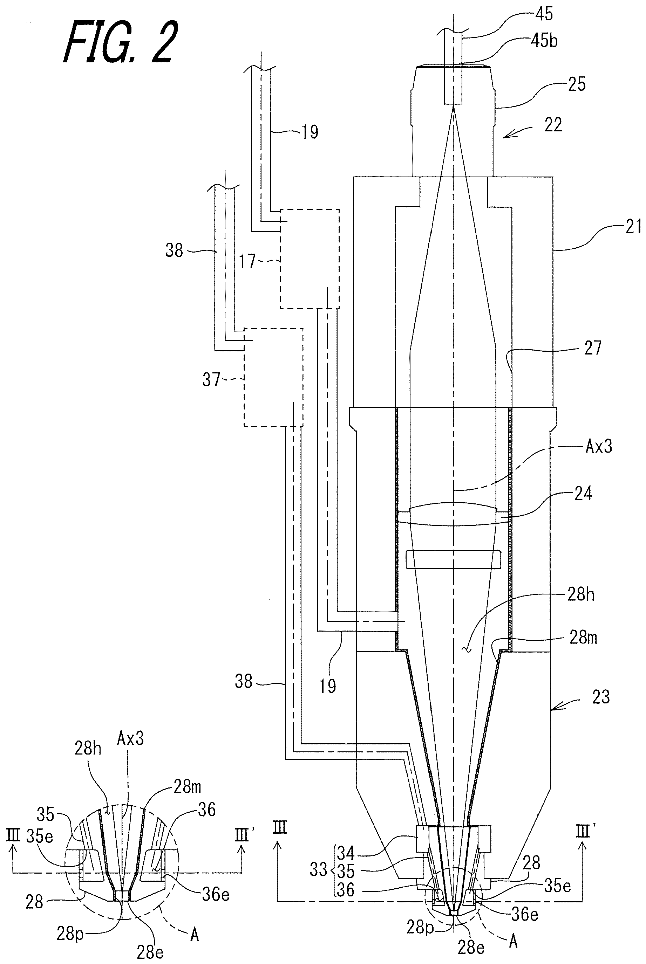

FIG. 2 is a cross-sectional view of the laser head 20 of the laser beam machine 1 according to the embodiment. FIG. 2 is a sectional view of the laser head 20 taken along a section passing through the optical axis Ax3 of the laser beam emitted from the laser nozzle 28, for explaining the optical system of the laser head 20. Referring to FIG. 2, the laser head 20 includes a head body 21, an upper unit 22, and a lower unit 23. The upper unit 22 is attached to the head body 21. The upper unit 22 includes a connector 25. The connector 25 is a connector for attaching the second end 45b of the optical fiber 45 to the laser head 20.

A lower unit 23 is attached to the head body 21. The lower unit 23 includes a lens 24 that is provided to face the second end 45b of the optical fiber 45 and is configured to narrow the laser beam transmitted through the optical fiber 45 toward the workpiece W. That is, the laser beam machine 1 includes the lens 24. Although not illustrated in FIG. 2, a separate lens for focusing the light emitted from the second end 45b of the optical fiber 45 may be provided between the connector 25 and the lens 24. A laser nozzle 28 is attached to the tip of the lower unit 23. The upper unit 22, the head body 21, the lower unit 23, and the laser nozzle 28 are provided with an optical path 27 for passing the laser beam.

As shown in FIG. 2, the laser beam machine 1 includes a second valve 17 in the head body 21. The second valve 17 is configured to send the gas to the laser nozzle 28. The control circuitry 7 is configured to control the second valve 17. The gas is preferably oxygen gas for promoting melting of the workpiece W, but may be air, nitrogen gas, or argon gas. In the following embodiments, the gas sent from the second valve 17 is called as the assist gas AG. The assist gas AG is stored in the gas storage 18 (see FIG. 1), and is sent to the laser nozzle 28 via the gas supply path 19 by a pump (not illustrated). The laser nozzle 28 has a through hole 28h through which the light narrowed by the lens 24 and the gas to be blown to the workpiece W pass. Preferably, the laser nozzle 28 is made of copper. Preferably, the surfaces of the laser nozzle 28 that form the through hole is plated with gold 28m. It is more preferable that nickel plating is applied between the surfaces plated with gold 28m and the copper surfaces, because diffusion between copper and gold is prevented. Preferably, the remaining surfaces of the laser nozzle 28 are chrome-plated. This prevents the oxidation of the laser nozzle 28 and each absorption of the laser beam by the laser nozzle 28. Further, plating of gold 28m is more preferable since the reflectance of the laser beam is high and the loss of the laser energy is small. The material of the laser nozzle 28 may be a metal not limited to copper. The surface of the laser nozzle 28 may not be plated.

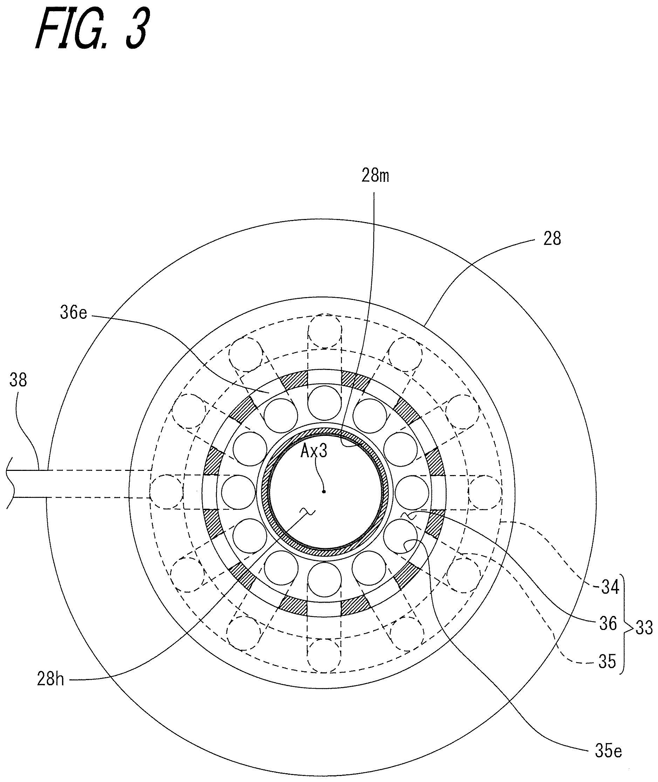

Further, referring to FIG. 2, the laser nozzle 28 has a tip 28e, and the through hole 28h forms an opening 28p at the tip 28e. FIG. 3 is a sectional drawing by the section line III-III' of FIG. 2 As shown in FIGS. 2 and 3, the laser beam machine 1 includes a third valve 37 in the head body 21. The third valve 37 is configured to adjust the amount of the coolant sent from the pump to the laser nozzle 28. The control circuitry 7 is configured to control the third valve 37. The coolant is preferably ambient air. The coolant is taken in from an outside air intake port (not illustrated) and is sent to the laser nozzle 28 via the coolant supply path 38. The laser nozzle 28 has a nozzle cooling circuit 33 through which a coolant passes. The nozzle cooling circuit 33 comprises a primary annular passage 34, a plurality of linear discharge passages 35 and a secondary annular passage 36. The coolant flowing in from the coolant supply path 38 is sent to the primary annular passage 34 surrounding the 28h of the through hole. Thereafter, the refrigerant is sent from the primary annular passage 34 toward the primary discharge port 35e via the discharge passage 35. The primary discharge port 35e is connected to the secondary annular passage 36, and the coolant is discharged from the secondary annular passage 36 via a discharge passage 36e extending in a radial direction with respect to the optical axis Ax3 of the laser beam. That is, the coolant is discharged to the side of the laser nozzle 28. If the coolant is discharged in a substantially radial direction with respect to the optical axis Ax3 of the laser beam, the secondary annular passage 36 and the discharge passage 36e may be omitted. For example, a recess (not illustrated) may be provided such that the discharge passage 36e is provided on the entire outer portion of the secondary annular passage 36. The shape of the nozzle cooling circuit 33 is not limited to the shape shown in FIGS. 2 and 3. A circulation type nozzle cooling circuit as shown in Japanese Utility Model Application Laid-Open No. H02-006185 may be used, and in this case, the refrigerant may be a liquid such as cooling water.

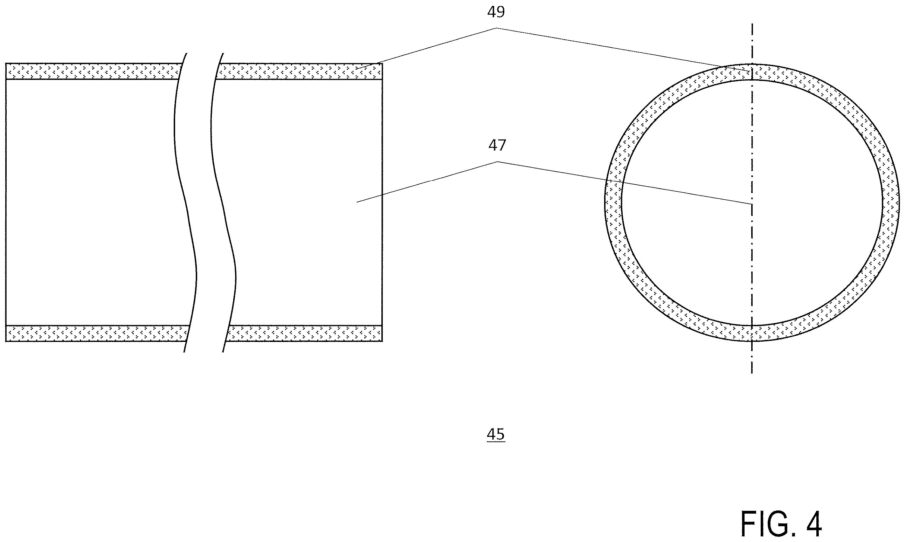

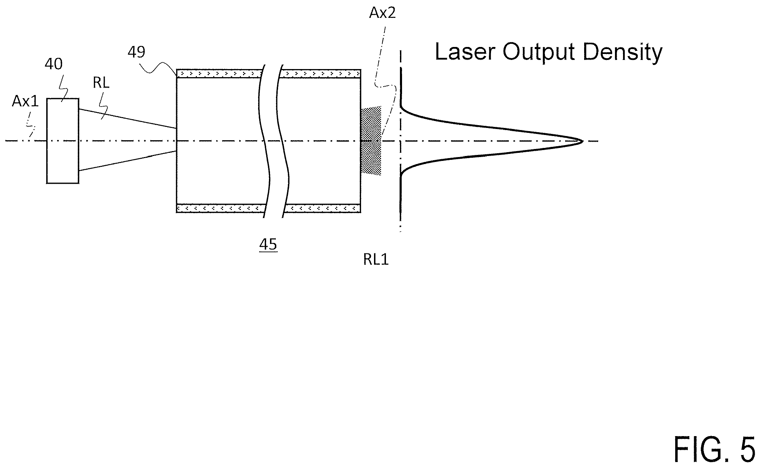

FIG. 4 is an internal configuration diagram of the optical fiber 45 according to the embodiment. The optical fiber 45 includes a transmission portion 47 and a reflector 49. The transmission portion 47 has a cylindrical shape and is configured to transmit the laser beam. The reflector 49 is a tubular member that covers the outer periphery of the transmission portion 47, and is configured to reflect the laser beam at the interface with the transmission portion 47. FIG. 5 shows an example of the laser beam RL when the optical axis Ax1 of the laser beam RL and the central axis Ax2 of the optical fiber 45 are aligned. FIG. 5 shows the magnitude of the laser power density on the right side of the diagram of the optical fiber 45. In FIG. 5, the laser power density increases as the line of the graph goes to the right. FIG. 5 shows an example in which the laser power density is distributed so as to follow a Gaussian distribution. As shown in FIG. 5, the laser power is highest near the center line Ax2 of the optical fiber 45 and gradually decreases.

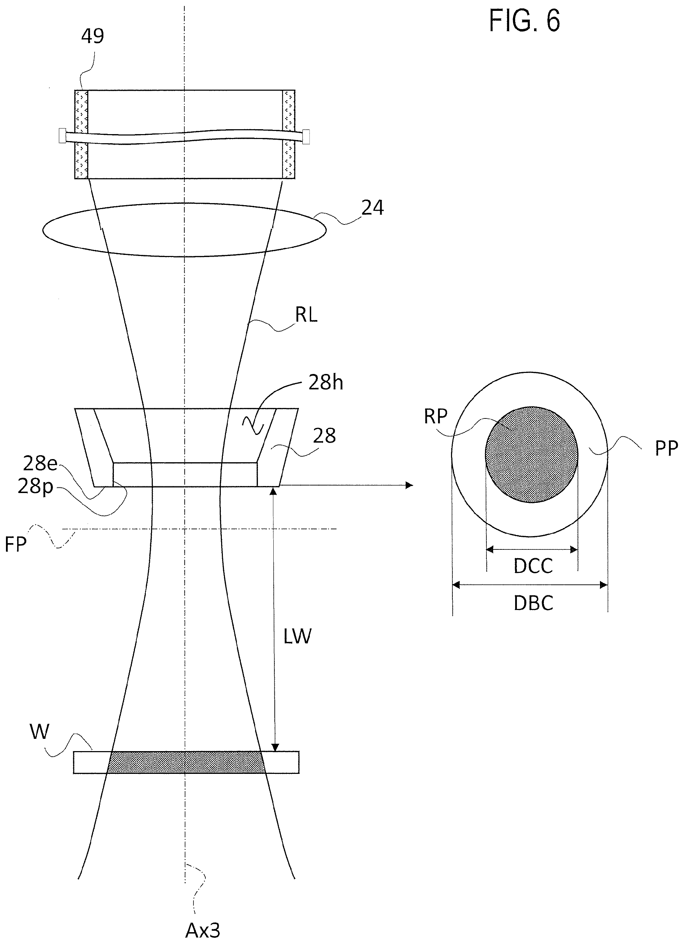

FIG. 6 is a schematic diagram showing a laser beam RL ahead of a laser nozzle 28 according to the embodiment. As shown in FIG. 6, the laser beam RL is most converged at the focal position FP and is incident on the surface of the workpiece W in a slightly spread state. In general, the focal position FP is provided slightly outside the nozzle tip 28e. Here, a portion of the opening 28p of the nozzle tip 28e where the laser output power densities are equal to or higher than predetermined thresholds is referred to as an irradiation portion RP, and the remaining portion is referred to as a peripheral portion PP. The diameter DCC of the irradiation portion RP may be, for example, the value of the $D4\sigma$ defined in the ISO 11446 standard. The $D4\sigma$ is determined such that the range of the output density exceeding the threshold value is determined so as to include the intensity distribution falling within the range that is four times of the standard deviation $\sigma$ of the intensity distribution of the laser beam RL. The diameter DCC is obtained by measurement with a measuring instrument or by using optical analysis software. In FIG. 6, the diameter of the peripheral portion PP is indicated as DBC (hereinafter, DBC is referred to as an opening diameter), and the opening diameter DBC is determined from the specification of the laser nozzle 28. The peripheral portion PP surrounds the irradiation portion RP in the radial direction with respect to the optical axis Ax3 of the laser beam RL. As shown in FIG. 6, the assist gas AG is jetted from the laser nozzle 28 so as to reach both the irradiation portion RP and the peripheral portion PP.

In the following embodiments, the ratio of the opening diameter DBC of the nozzle tip 28e to the diameter DCC of the laser nozzle 28 at which the output intensity of the laser beam RL exceeds a predetermined value (defined by the D4σ) is referred to as an area-occupying ratio AOR [%]. When the output intensity of the laser beam RL output from the laser oscillator 40 is P [W] and the laser output density follows a Gaussian distribution, the heat quantity $P_H$[W] is obtained as in the following (Equation 1).

$$P_H = P \times (1.82 \times AOR - 100)/100 \quad \text{(Equation 1)}$$

This 1.82 times is based on the size of the beam diameter in which 99% of the energy is included. It should be noted that when the laser output density may follow a distribution other than the Gaussian distribution, or another threshold (full width at half maximum, $1/e^2$ knife edge width) is used to identify the irradiation portion RP, the magnification by which the area-occupying ratio AOR is multiplied may be determined so as to be the size of the beam diameter including 99% or more of energy.

The heating time of the laser nozzle 28 is t[sec] and the temperature of the laser nozzle 28 before heating is $T_0$ [°C], the specific heat of the laser nozzle 28 is c [kJ/(kg•°C.)], and the density of the laser nozzle 28 is $\rho$[kg/m$^3$] and the volume of the laser nozzle 28 is V[m$^3$] then, the temperature T [°C] of the laser nozzle 28 after heating is obtained as the following (Equation 2).

$$T - T_0 = (P_H - P_{OFF}) \times t/0.278c\rho V \quad \text{(Equation 2)}$$

$P_{OFF}$ of (Equation 2) is the quantity of heat radiated per unit time is obtained by taking the convection heat radiation by the atmosphere into account, the refrigerant, and the assist gas AG. This $P_{OFF}$ is obtained empirically.

The laser beam machining with high accuracy is realized by adjusting the length LW between the nozzle tip 28e and the workpiece W. The control circuitry 7 controls the electrostatic capacity between the nozzle tip 28e and the workpiece W by a method disclosed in US Patent Publication No. 2004-159643 and thereby distance LW can be adjusted. When the laser nozzle 28 is heated and expanded by the laser beam RL, the relationship between the distance LW and the capacitance changes. Thus, when the laser nozzle 28 is prevented from being heated by the laser beam RL, even in the case of laser processing for a long time, processing can be performed with stable accuracy.

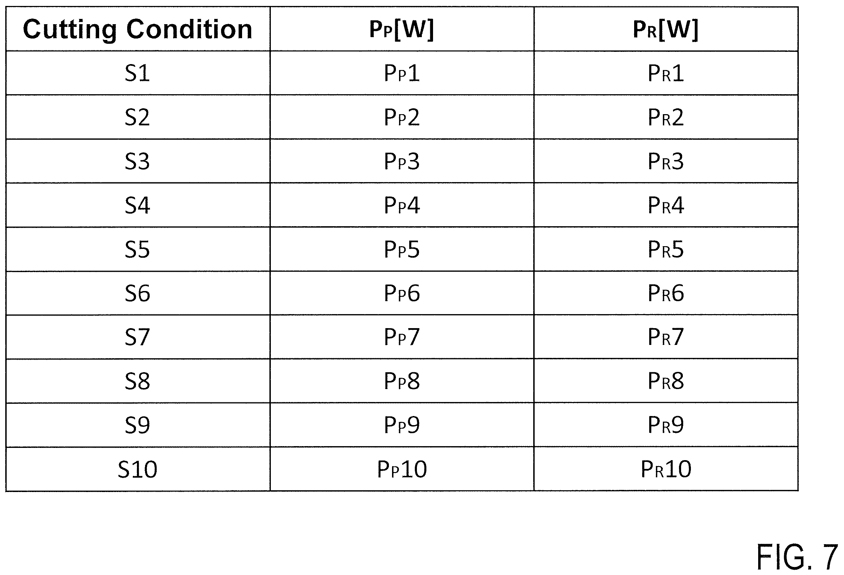

FIG. 7 is an example of a setting data 8a. The setting data 8a sets materials of the workpiece W, thickness of the workpiece W, and the output intensity $P_P$[W], output intensity $P_P$[W] of the laser beam RL when piercing, output intensity $P_R$ [W] of laser beam RL when laser cutting for every combination of the assist gas AG. This combination is set by calling a M622 code in the EIA/ISO program format, for example. As shown in FIG. 7, with regards to the output intensity $P_P$[W], output intensity $P_R$[W] of laser beam RL in the case of laser cutting, a plurality of levels may be set. This level is called a cutting condition. FIG. 7 shows an example in which ten cutting conditions are set.

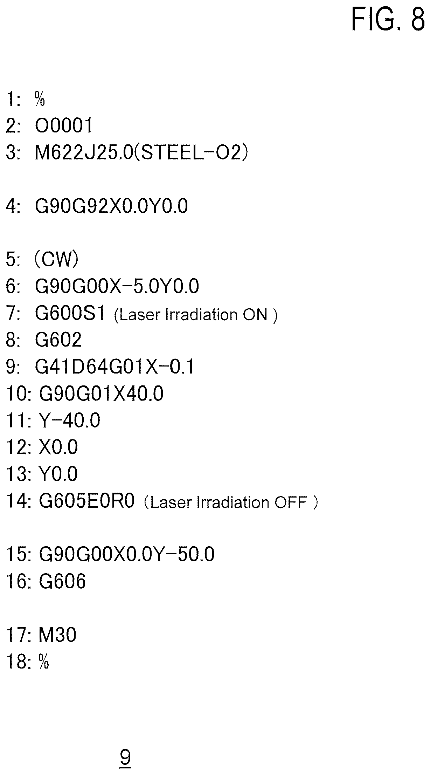

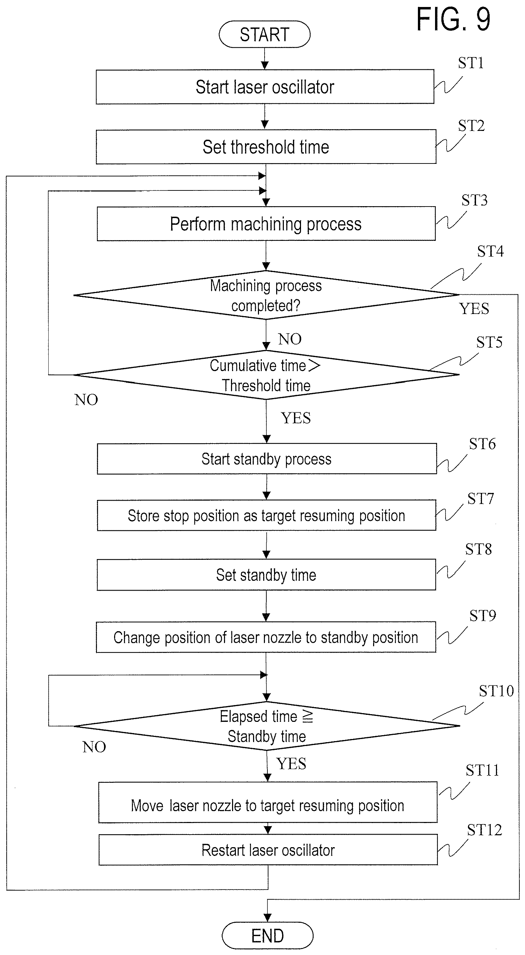

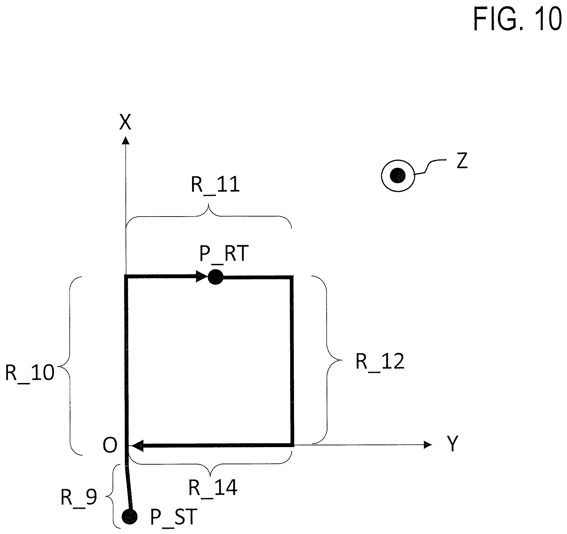

FIG. 8 shows an example of the machining program 9 for laser beam machining. FIG. 9 is a flowchart of the laser beam machining method according to the first embodiment. FIG. 10 shows an example of the movement path of the laser nozzle 28 according to the first embodiment. In FIG. 8, "line number:" is added to the left side of the machining program 9 for convenience of reference. The control circuitry 7 executing the control program which analyzes the machining program 9 executes the following processing. That is, the control circuitry 7 is configured to execute the laser beam machining method according to the embodiment. Line number 1 indicates the program start and line number 2 indicates the program number. The control circuitry 7 which executes the control program 8 reads the settings that the material of the workpiece W is mild steel, the thickness of the workpiece W is 25.0 mm from M622 code, and the assist gas AG is an oxygen gas and selects the setting data 8a by line number 3. The control circuitry 7 that executes the control program 8 performs initial setting such as determination of coordinates by the codes of the line numbers 4 to 6. In step ST1 of FIG. 8, the control circuitry 7 executing the control program 8 controls the laser oscillator 40 executes the control program 8 in the execution of line number and starts the laser oscillator 40. Specifically, the control circuitry 7 executing the control program 8 controls the laser oscillator 40 such that the intensity piercing is performed by the intensity $P_P$1 [W] specified by the cutting condition S1 of G600 code. At this time, the control circuitry 7 executing the control program 8 causes the first valve 16 to inject oil toward the workpiece W. Further, the control circuitry 7 executing the control program 8 opens the second valve 17 and the third valve 37 to start cooling the laser nozzle 28 by injecting the assist gas AG from the laser nozzle 28 and by flowing the refrigerant through the nozzle cooling circuit 33 provided in the laser nozzle 28.

The code of line number 8 causes the control circuitry 7 that executes the control program 8 sets the cutting conditions for the laser. Simultaneously, in step ST2, the control circuitry 7 executing the control program 8 sets the threshold time $t_{th}$. In the G602 code of line number 8, the argument of the cutting condition is omitted. In this case, following cutting condition S1 of the G600 code, the control circuitry 7 executing the control program 8 calculates the intensity $P_R$1 [W] specified by the cutting condition S1 of the G602 code from the setting data 8a, and controls the laser oscillator 40 to perform cutting machining. Output intensity $P_R$1[W] of laser beam RL and the temperature $T_{th}$ of the laser nozzle 28 at which cooling is to be started is read. The temperature $T_{th}$ of the laser nozzle 28 at which cooling is to be started is set in advance and stored in the memory of the control circuitry 7. The area-occupying ratio AOR [%] is obtained in advance from the opening diameter DBC of the nozzle tip 28e and the diameter DCC obtained in advance by a measuring device or optical analysis software. Therefore, the control circuitry 7 executing the control program 8 calculates the heat quantity $P_H$ [W] added to the nozzle 28 per unit time can be obtained by (Equation 1). When the temperature of the laser nozzle 28 to start cooling is set to $T_{th}$, the control circuitry 7 executing the control program 8 calculates the threshold time $t_{th}$ by the following (Equation 3).

$$t_{th}= 0.278c\rho V \, (T_{th}-T_0)/(P_H-P_{OFF}) \quad \text{(Equation 3)}$$

This $T_{th}$ is a value obtained by subtracting a predetermined offset from a temperature at which the electrostatic capacitance may change due to deformation of the laser nozzle 28 caused by heating. As can be seen from (Equation 3), the threshold time $t_{th}$ is obtained based on a ratio between the opening diameter DBC of the tip 28e of the laser nozzle 28 and diameter DCC of which the output density of the laser beam RL in the laser nozzle 28 exceeds predetermined threshold value (Area occupancy ratio AOR).

In step ST3, the control circuitry 7 executing the control program 8 performs the machining process including machining the workpiece W by irradiating the workpiece W with the laser beam RL from the nozzle 28. Specifically, the control circuitry 7 executing the control program 8 performs the tool diameter correction by the code of line number 9, and moves the laser nozzle 28 to the position of (-0.1, 0, 0). The control circuitry 7 that executes the control program 8 moves the laser nozzle 28 according to the codes of the line numbers 10 to 13. That is, the machining process includes the irradiation of the laser beam RL via the through hole 28h of the laser nozzle 28 which is plated with gold 28m is formed. Also since the second valve 17 and the third valve 37 are opened, the machining process further includes cooling the laser nozzle 28 by injecting the assist gas AG from the laser nozzle 28 and by flowing the coolant through the nozzle cooling circuit 33 provided in the laser nozzle 28. One or both of the injection of the assist gas AG and the flow of the coolant through the nozzle cooling circuit 33 may be omitted in the machining process. During the execution of the machining process, the control circuitry 7 executing the control program 8 measures the cumulative time $t_{acm}$ of the machining process. In the present embodiment and the following embodiments, the machining performed by moving the laser nozzle 28 in response to one command is referred to as a machining unit. In the case of a machining program described in the EIA/ISO program format such as the machining program 9, one instruction is determined in units of one line, and thus the machining unit is determined for each line. That is, the machining process includes moving the laser nozzle 28 for each machining unit set in the machining program 9 and machining the workpiece W.

In step ST4, the control circuitry 7 executing the control program 8 determines whether the machining process has been completed. If the machining process has not been completed (No in step ST4), the process proceeds to step ST5. In step ST5, the control circuitry 7 executing the control program 8 determines whether or not the cumulative time $t_{acm}$ exceeds a threshold time $t_{th}$ that is predetermined (No in step ST5), the process returns to step ST3. When the cumulative time $t_{acm}$ exceeds the threshold time $t_{th}$ that is predetermined (Yes in step ST5), in step ST6, the control circuitry 7 executing the control program 8 starts the standby process including suspending the output of the laser beam RL. That is, the standby process is started when the cumulative time $t_{acm}$ during machining process without the standby process interposed therebetween exceeds the threshold time $t_{th}$ that is predetermined. In the standby process, since the third valve 37 is not closed, the standby process further includes cooling the laser nozzle 28 by flowing the coolant through the nozzle cooling circuit 33 provided in the laser nozzle 28. In the standby process, the assist gas AG may be further injected. By injecting the assist gas AG in the standby process, air is prevented from being mixed into the piping, and the possibility of the oxygen purity deteriorating and causing a machining failure at the time of machining resumption can be reduced. In the standby process, the coolant may not be supplied to the nozzle cooling circuit 33. In step ST6, the control circuitry 7 executing the control program 8 suspends the movement of the laser nozzle 28.

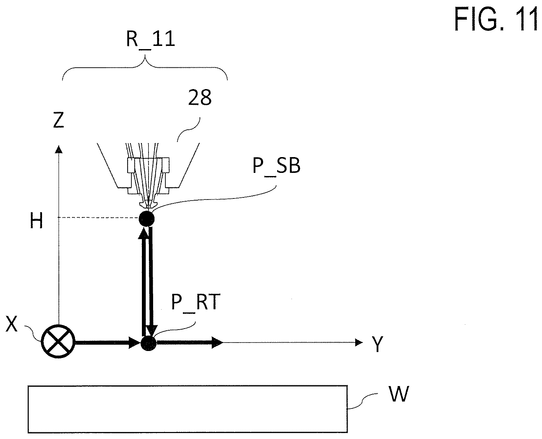

FIG. 10 shows an example of the movement path of the laser nozzle 28 according to the first embodiment as viewed from the Z direction. FIG. 11 shows an example of the movement path of the laser nozzle 28 according to the first embodiment as viewed from the X direction. In FIGS. 10 and 11, the movement paths of the nozzles corresponding to the respective line numbers of the program code of FIG. 8 are indicated by R_<line number>. In FIG. 10, the initial position of the laser nozzle 28 shown in the line number 9 is set as P_ST, and the position of the laser nozzle 28 at which the standby process is started is set as P_RT. In the examples of FIGS. 10 and 11, the example in which the standby process is started at the time of execution of the code indicated in line number 11 is shown, but the standby process may be started during execution of any code of line numbers 10 to 13.

After step ST6, in step ST7, the control circuitry 7 executing the control program 8 stores the position of the laser nozzle 28 (stop position) immediately after switching to the standby process as the target resuming position P_RT. The standby process further includes storing the position (stop position) of the laser nozzle 28 immediately after the standby process is performed as the target resuming position P_RT. In step ST8, the control circuitry 7 executing the control program 8 set the standby time $t_{sus}$ which specifies the time of standby process. The standby time $t_{sus}$ is obtained based on the following (Equation 4).

$$t_{sus}=(T_{het}-T_0) \times 0.278 \, c\rho V/P_{OFF} \quad \text{(Equation 4)}$$

Here, $T_{het}$ is a temperature corresponding to the degree of heating of the laser nozzle 28 in the machining process. In the present embodiment, $T_{het}$ is equal to $T_{th}$. Therefore, when (Equation 2) is used, (Equation 4) can be expressed as (Equation 5) below.

$$t_{sus} \doteqdot (P_H-P_{OFF}) \times t_{acm}/P_{OFF} \quad \text{(Equation 5)}$$

As it is obvious from (Equation 5), the standby time $t_{sus}$ is determined based on an output intensity P of the laser beam and a ratio between an opening diameter DBC of a tip 28e of the laser nozzle and a diameter DCC at which an output density of the laser beam exceeds a predetermined threshold value in the nozzle 28 (area occupancy area AOR), accumulated time $t_{acm}$. Note that, in the present embodiment, the accumulated time $t_{acm}$ is mostly equal to the threshold time $t_{th}$.

In step ST9, as shown in FIG. 11, the control circuitry 7 executing the control program 8 changes the position of the laser nozzle 28 to the standby position P_SB away from the target resuming position P_RT. That is, the standby process further includes changing the position of the laser nozzle 28 to the standby position P_SB away from the target resuming position P_RT. In the example of FIG. 11, the standby position P_SB is a position shifted from the target resuming position P_RT in the Z direction by a height H in a direction away from the workpiece W. The height H is a height sufficient to prevent the laser nozzle 28 from receiving radiant heat generated by heating the workpiece W.

In step ST10, the control circuitry 7 executing the control program 8 determines whether the elapsed time $t_{elp}$ from the start of the standby process is equal to or greater than standby time $t_{sus}$. The elapsed time $t_{elp}$ from the start of the standby process is less than the standby time $t_{sus}$ (No in step ST10), step ST10 is repeated. When the elapsed time $t_{elp}$ from the start of the standby process is equal to or larger than the standby time $t_{sus}$ (Yes in step ST10), in step ST11, the control circuitry 7 executing the control program 8 restarts the machining process in step ST11. Therefore, the standby process is performed during the standby time $t_{sus}$ corresponding to the degree of heating of the laser nozzle 28 in the machining process. Thereafter, in step ST11, the control circuitry 7 executing the control program 8 moves the laser nozzle 28 to the target resuming position P_RT. That is, the machining process further includes returning the position of the laser nozzle 28 from the standby position P_SB to the target resuming position P_RT. After the workpiece W is moved to the target resuming position P_RT, the control circuitry 7 executing the control program 8 preferably opens the first valve 16 to inject oil to the workpiece W. In this case, in step ST12, the control circuitry 7 executing the control program 8 restarts the laser oscillator 40 to perform piercing. In doing so, it is desirable that the cutting conditions are set to S1 based on the previous G600 code and piercing is performed. After the end of step ST12, the process returns to step ST3.

Thereafter, again in step ST3, the control circuitry 7 executing the control program 8 executes the remaining machining process. In doing so, it is desirable that the cutting conditions are set to S1 based on G602 code and the machining process is performed. When the machining process is finished (Yes in step ST4) before the accumulated time $t_{acm}$ exceeds the threshold time $t_{th}$, the laser beam machining process according to the present embodiment is finished. This may be because the control circuitry 7 executing the control program 8 determines that the machining process has been terminated at the time when the code of laser irradiation OFF in the line number 14 is identified.

<Features and Effects of Laser beam machining method in Present Embodiment>

The laser beam machining method according to the first embodiment, the control program 8 including an instruction for causing the control circuitry 7 to execute the laser beam machining method, and the laser beam machine 1 is configured to move to a standby process when the accumulated time $t_{acm}$ of the machining process exceeds the threshold time $t_{th}$, and thus it is able to perform continuous machining by effectively cooling the laser nozzle 28.

<Modified example of the first Embodiment>

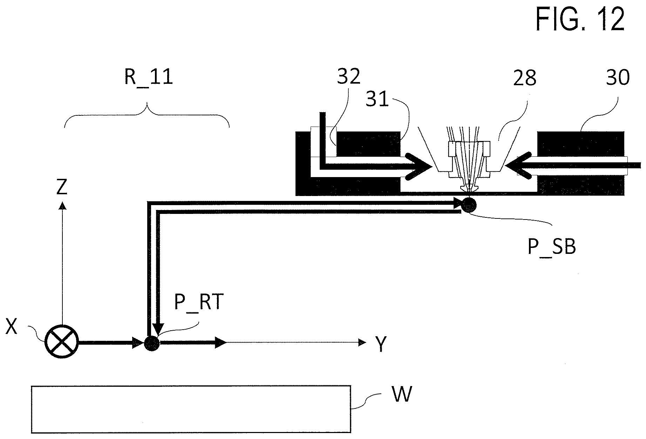

In the above embodiments, the standby position P_SB is a position shifted from the target resuming position P_RT by the height H in a direction away from the workpiece W, but may be another position. Further, a cooler 30 for cooling the laser nozzle 28 may be separately provided at the standby position P_SB. FIG. 12 shows a modification of the movement path of the laser nozzle 28 according to the first embodiment as viewed from the X direction. Referring to FIG. 12, the standby position P_SB is a place shifted also in the Y direction with respect to the target resuming position P_RT, and the cooler 30 includes an insertion port 31 for inserting the laser nozzle 28 and a refrigerant supply path 32 for supplying a refrigerant to the insertion port 31. When the laser nozzle 28 is cooled by the cooler 30 in the standby process, as the value of $P_{OFF}$ that is denominator in (Equation 5) can be increased, the standby time $t_{sus}$ can be shortened. Therefore, the total machining time can be shortened, and the machining efficiency can be improved.

<Second Embodiment>

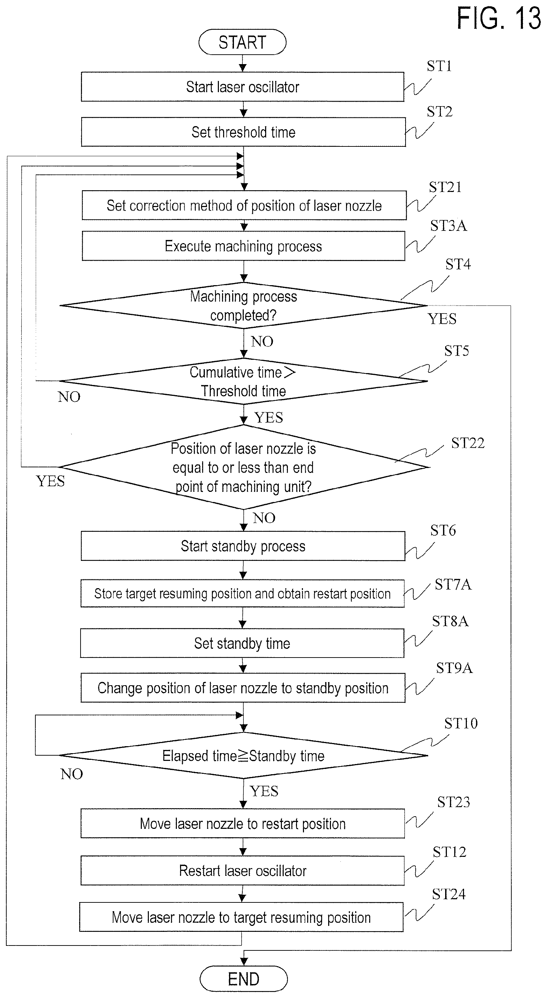

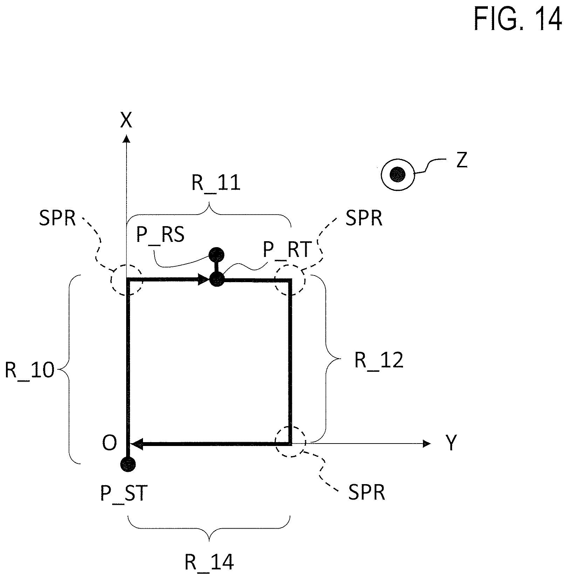

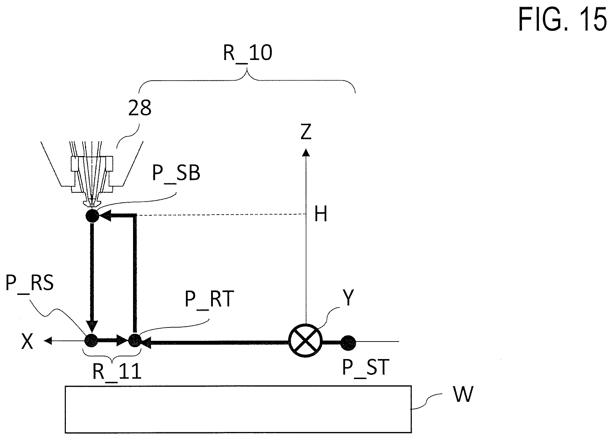

In the first embodiment, piercing and laser beam machining is restarted at the target resuming position P_RT, however, since the output of the laser and the output of the assist gas AG are unstable at the start of the laser beam machining, it is desirable to restart laser processing by piercing at a restart position P_RS deviated from the target resuming position P_RT in order to improve processing quality. The laser beam machining method according to the second embodiment includes such a method of moving the laser nozzle 28. FIG. 13 is a flowchart of a laser beam machining method according to the second embodiment. FIG. 14 shows an example of the movement path of the laser nozzle 28 according to the second embodiment as viewed from the Z direction. FIG. 15 shows an example of the movement path of the laser nozzle 28 according to the second embodiment as viewed from the Y direction.

In FIG. 13, the same processing as that of the first embodiment is denoted by the same reference numeral, and the description thereof will be omitted. After the completion of step ST2, the control circuitry 7 executing the control program 8 sets the tool-diameter correction by the code of line number 9 in step ST21. In line number 9, a G41 code is described. This is because the correction is instructed to shift the nozzle tip 28e to the left side facing the moving direction of the laser nozzle 28. When a G42 code is described in the machining program 9, it is instructed to correct the nozzle tip 28e so as to be shifted to the right side facing the traveling direction of the laser nozzle 28. In ST3A, the control circuitry 7 executing the control program 8 performs the tool-diameter correction process set in step ST3, in addition to the process in step ST21. That is, the machining process includes correcting the position of the laser nozzle 28 based on the presence of the product part on either the right side or the left side in the moving direction of the laser nozzle 28. This one side is determined based on the code (G41 code or G42 code) for tool-diameter correction in the machining program 9.

When the cumulative time $t_{acm}$ does not exceed the threshold time $t_{th}$ that is predetermined (No in step ST5), the control circuitry 7 executing the control program 8 returns to step ST21 and executes step ST21 again. When the cumulative time $t_{acm}$ exceeds the threshold time $t_{th}$ that is predetermined (Yes in step ST5), in step ST22, the control circuitry 7 executing the control program 8 includes determines whether the position of the laser nozzle 28 is in the switching prohibition region SPR which is a predetermined distance or less from the end point of the machining unit. The end point of the machining unit includes both the start point of the machining unit and the end point of the machining unit. In FIG. 14, the switching prohibition region SPR is shown as a region surrounded by a dotted line. In the switching prohibition region SPR, heat tends to accumulate in regions near the corners of the product. Therefore, when the standby is resumed in the switching prohibition region SPR, there is a high possibility that a machining defect occurs. Thus, the control circuitry 7 that executes the control program 8 is configured to continue the laser beam machining without standby when the position of the laser nozzle 28 is in the switching prohibition region SPR.

Therefore, when the position of the laser nozzle 28 is in the switching prohibition region SPR which is less than or equal to the predetermined distance from the end point of the machining unit (Yes in step ST22), the control circuitry 7 executing the control program 8 returns to step ST21 and executes step ST21 again. When the position of the laser nozzle 28 is not in the switching prohibition region SPR which is equal to or less than the predetermined distance from the end point of the machining unit (No in step ST22), the control circuitry 7 executing the control program 8 executes step ST6. That is, in the laser beam machining method according to the present embodiment, in the case of the laser nozzle 28 being equal to or less than a predetermined distance from an end point of the machining unit when the cumulative time $t_{acm}$ exceeds the threshold time $t_{th}$, the machining process is continued until the position of the laser nozzle 28 passes through the switching prohibition region, and the standby process is started.

After step ST6, in step ST7A, in addition to the processing in step ST7, the restart position P_RS is obtained. The restart position P_RS is located on the other side opposite to the one side with respect to the target resuming position P_RT. That is, when the tool-diameter correction code is the G41 code, the control circuitry 7 executing the control program 8 sets the restart position P_RS on the left side of the target resuming position P_RT in the moving direction of the laser nozzle 28. When the tool-diameter correction code is the G42 code, the control circuitry 7 executing the control program 8 sets the restart position P_RS on the right side of the target resuming position P_RT in the moving direction of the laser nozzle 28. The distance between the restart position P_RS and the target resuming position P_RT is set to a value that empirically improves the machining accuracy.

Thereafter, in step ST8A, the control circuitry 7 executing the control program 8 sets the standby time $t_{sus}$ based on (Equation 5). In the first embodiment, the cumulative time $t_{acm}$ is equal to the threshold time $t_{th}$, however in the present embodiment, the cumulative time $t_{acm}$ can be longer than the threshold time $t_{th}$. The standby time $t_{sus}$ is set according to the cumulative time $t_{acm}$. In the step ST9A, the control circuitry 7 executing the control program 8 changes the position of the laser nozzle 28 to the standby position P_SB determined based on the restart position P_RS. FIG. 15 shows the standby position P_SB according to the present embodiment. This standby position P_SB is a position shifted from the restart position P_RS in the Z direction by the height H in a direction away from the workpiece W. In the second embodiment, the standby position P_SB may be the same position as that in the first embodiment.

When the elapsed time $t_{elp}$ from the start of the standby process is equal to or larger than standby time $t_{sus}$ (Yes in step ST10), the control circuitry 7 executing the control program 8 restarts the machining process in step ST23. Specifically, the control circuitry 7 executing the control program 8 moves the laser nozzle 28 to the restart position P_RS. After the workpiece W is moved to the restart position P_RS, the control circuitry 7 executing the control program 8 preferably causes the first valve 16 to inject oil to the workpiece W. Thereafter, in step ST12, the control circuitry 7 executing the control program 8 restarts the laser oscillator 40 to perform piercing. At this time, it is desirable that the cutting conditions are set to S1 based on the previous G600 code and the piercing is performed. In step ST24, the control circuitry 7 executing the control program 8 moves the laser nozzle 28 to the target resuming position P_RT while irradiating the laser beam RL. That is, at the start of the machining process, the machining process further includes moving the laser nozzle 28 to the target resuming position P_RT after piercing at the restart position P_RS that is deviated from the target resuming position P_RT. At this time, it is desirable that the cutting condition is set to S1 based on the previous cutting condition G602 code, and the laser nozzle 28 is moved to the target resuming position P_RT while the laser beam RL is being emitted. After the step ST24 is completed, the control circuitry 7 executing the control program 8 returns to step ST21 and executes step ST21 again.

<Features and Effects of Laser beam machining method in Present Embodiment>

The laser beam machining method according to the second embodiment, the control program 8 including an instruction for causing the control circuitry 7 to execute the laser beam machining method, and the laser beam machine 1 performs piercing at the restart position P_RS slightly shifted from the target resuming position P_RT to restart laser processing. Therefore, the laser beam RL is stably used for processing, and thus the processing quality can be improved.

<Modified Examples in All Embodiments>

It is possible to add the process of step ST22 to the first embodiment, and perform process of the step ST8A in the second embodiment, instead of the process of step ST8. In addition, the process of step ST22 is deleted in the second embodiment, and the process of step ST8 may be performed instead of the process of step ST8A. In the process of the above-described embodiment, an example in which the cutting conditions are changed by the G603 code is not described, however, when the machining conditions are changed in the middle of the machining process by the G603 code and the intensity P of the laser beam RL is changed, the step ST2 is executed at that timing and re-calculate threshold time $t_{th}$ based on the changed intensity P.

In the above-described embodiment, the setting data 8a is set for each combination of the materials of the workpieces W, the thicknesses of the workpieces W, and the assist gas AG, and the combination of the materials of the workpieces W, the thicknesses of the workpieces W, and the assist gas AG is set as the argument of the M622 code, whereby the corresponding setting data 8a is selected. However, the setting data 8a is prepared in a mode in which the setting data M622 can be distinguished by an arbitrary identifier, and the argument of the gap code includes the identifier, whereby the setting data SL as shown in FIG. 7 is selected. A set of cutting conditions may be selected. In addition, although the laser beam machine 1 for machining the metal plate MP is described, the present invention can be applied to a laser beam machine for machining a pipe or the like. In this case, the laser head 20 may be rotatable around a rotation axis parallel to each of the X axis and the Y axis so that three dimensional machining can be performed. The laser beam of the laser beam machine 1 according to the present application may not be high-output.

A part or all of the functions of the logic of the control program 8 may be realized by a dedicated processor or integrated circuit. The control program 8 may be stored in a computer-readable storage medium such as a floppy disk, an optical disk, a CD-ROM, a magnetic disk, an SD card, a USB memory, an external hard disk, or the like, which is removable from the computer such as the numerical control apparatus 6, in addition to the memory built in the control circuitry 7.

In this application, the word "comprise" and its derivatives are used as openended terms to describe the presence of elements but not to exclude the presence of other elements not listed. This applies to "having", "including" and derivatives thereof.

The terms "member," "part," "element," "body," and "structure" may have a plurality of meanings, such as a single portion or a plurality of portions.

The ordinal numbers such as "first" and "second" are merely terms for identifying the configuration, and do not have other meanings (for example, a specific order). For example, the presence of a "first element" does not imply the presence of a "second element," and the presence of a "second element" does not imply the presence of a "first element."

Terms of degree such as "substantially", "about", and "approximately" can mean a reasonable amount of deviation such that the end result is not significantly changed, unless the embodiment is specifically described otherwise. All numerical values recited herein may be construed to include terms such as "substantially," "about," and "approximately."

The phrase "at least one of A and B" as used herein should be interpreted to include A alone, B alone, and both A and B.

Obviously, numerous modifications and variations of the present invention are possible in light of the above teachings. Thus, it is to be understood that the invention may be practiced otherwise than as specifically described herein without departing from the scope of the invention.

## Claims

1.  A laser beam machining method comprising:

    performing a machining process of machining a workpiece by irradiating the workpiece with a laser beam from a nozzle; and
    performing a standby process of suspending output of the laser beam,
    wherein the standby process starts when a cumulative time of the machining process without the standby process interposed between the machining processes exceeds a threshold time that is predetermined.

2.  The laser beam machining method according to claim 1,
    wherein the machining process includes irradiating the laser beam through a through hole of the nozzle plated with gold.

3.  The laser beam machining method according to claim 1 or 2,
    wherein the threshold time is determined based on an output intensity of the laser beam and a ratio of an opening diameter of a tip of the nozzle to a diameter at which an output density of the laser beam exceeds a predetermined threshold value in the nozzle.

4.  The laser beam machining method according to any one of claims 1 to 3,
    wherein the standby process is performed during a standby time corresponding to a degree to which the nozzle is heated in the machining process.

5.  The laser beam machining method according to claim 4,
    wherein the standby time is determined based on an output intensity of the laser beam, the cumulative time, and a ratio of an opening diameter of a tip of the nozzle to a diameter at which an output density of the laser beam exceeds a predetermined threshold value in the nozzle.

6.  The laser beam machining method according to any one of claims 1 to 5,

    wherein the standby process further includes storing, as a target resuming position, a position of the nozzle immediately after switching to the standby process,
    wherein the standby process further includes changing the position of the nozzle to a standby position apart from the target resuming position, and
    wherein the machining process further includes returning the position of the nozzle from the standby position to the target resuming position.

7.  The laser beam machining method according to claim 6,
    wherein the standby process further includes cooling the nozzle by a cooler provided at the standby position.

8.  The laser beam machining method according to claim 6 or 7,
    wherein the machining process includes performing piercing at a restart position deviated from the target resuming position and thereafter moving the nozzle to the target resuming position on starting the machining process.

9.  The laser beam machining method according to claim 8,

    wherein the machining process includes correcting the position of the nozzle based on that a product part exists at one of a left side or a right side when viewed in a moving direction of the nozzle, and
    wherein the restart position is positioned at an opposite side to the one side with respect to the target resuming position.

10. The laser beam machining method according to claim 9,
wherein the one side is determined based on a code of a tool radius compensation of a machining program.

11. The laser beam machining method according to any one of claims 1 to 10,

wherein the machining process includes moving the nozzle at every machining unit defined in a machining program to machine the workpiece,
wherein the machining process is maintained until the nozzle passes a switching prohibition region that is within a predetermined distance from an end point of the machining unit, if the position of the nozzle is within the switching prohibition region when the cumulative time exceeds the threshold time, and
wherein the standby process starts after the nozzle passes the switching prohibition region.

12. The laser beam machining method according to any one of claims 1 to 11,
wherein the machining process and the standby process each further include cooling the nozzle by at least one of jetting assist gas from the nozzle or flowing a coolant through a nozzle cooling circuit provided in the nozzle.

13. A laser beam machine comprising:

control circuitry configured to perform the laser beam machining method according to any one of claims 1 to 12;
a laser oscillator configured to output the laser beam;
the nozzle; and
a transferring mechanism configured to move the nozzle.

14. A program comprising instructions which, when the program is executed by a control circuitry of a laser beam machine, causes the control circuitry to carry out the laser beam machining method according to any one of claims 1 to 12.

15. A computer-readable medium comprising instructions which, when executed by a control circuitry of a laser beam machine, causes the control circuitry to carry out the laser beam machining method according to any one of claims 1 to 12.

# FIG. 1

# FIG. 2

## FIG. 3

FIG. 4

FIG. 5

FIG. 6

| Cutting Condition | $P_P[W]$ | $P_R[W]$ |
|---|---|---|
| S1 | $P_P1$ | $P_R1$ |
| S2 | $P_P2$ | $P_R2$ |
| S3 | $P_P3$ | $P_R3$ |
| S4 | $P_P4$ | $P_R4$ |
| S5 | $P_P5$ | $P_R5$ |
| S6 | $P_P6$ | $P_R6$ |
| S7 | $P_P7$ | $P_R7$ |
| S8 | $P_P8$ | $P_R8$ |
| S9 | $P_P9$ | $P_R9$ |
| S10 | $P_P10$ | $P_R10$ |

FIG. 7

EP 4 703 078 A1

# FIG. 8

1: %

2: O0001

3: M622J25.0(STEEL-O2)

4: G90G92X0.0Y0.0

5: (CW)

6: G90G00X-5.0Y0.0

7: G600S1 (Laser Irradiation ON )

8: G602

9: G41D64G01X-0.1

10: G90G01X40.0

11: Y-40.0

12: X0.0

13: Y0.0

14: G605E0R0 (Laser Irradiation OFF )

15: G90G00X0.0Y-50.0

16: G606

17: M30

18: %

<u>9</u>

FIG. 9

START

Start laser oscillator — ST1

Set threshold time — ST2

Perform machining process — ST3

Machining process completed? — ST4
YES

NO

Cumulative time > Threshold time — ST5

NO

YES

Start standby process — ST6

Store stop position as target resuming position — ST7

Set standby time — ST8

Change position of laser nozzle to standby position — ST9

Elapsed time ≧ Standby time — ST10

NO

YES

Move laser nozzle to target resuming position — ST11

Restart laser oscillator — ST12

END

FIG. 10

FIG. 11

R_11

28

Z

P_SB

H

P_RT

X

Y

W

FIG. 12

# FIG. 13

```
                    ( START )
                        │
                        ▼
        ┌───────────────────────────────────┐   ST1
        │        Start laser oscillator       │
        └───────────────────────────────────┘
                        │
                        ▼
        ┌───────────────────────────────────┐   ST2
        │          Set threshold time          │
        └───────────────────────────────────┘
                        │
                        ▼
        ┌───────────────────────────────────────────┐   ST21
        │  Set correction method of position of laser nozzle  │
        └───────────────────────────────────────────┘
        ┌───────────────────────────────────┐   ST3A
        │       Execute machining process      │
        └───────────────────────────────────┘
                        │
                        ▼
              ╱ Machining process ╲   ST4
             ╱      completed?      ╲───── YES
              ╲                    ╱
                        │ NO
                        ▼
              ╱ Cumulative time > ╲   ST5
             ╱    Threshold time   ╲
              ╲                    ╱───── NO
                        │ YES
                        ▼
              ╱ Position of laser nozzle is ╲   ST22
             ╱  equal to or less than end    ╲
        YES ─╲  point of machining unit?     ╱
              ╲                             ╱
                        │ NO
                        ▼
        ┌───────────────────────────────────┐   ST6
        │         Start standby process        │
        └───────────────────────────────────┘
                        │
                        ▼
        ┌───────────────────────────────────────────────┐   ST7A
        │ Store target resuming position and obtain restart position │
        └───────────────────────────────────────────────┘
                        │
                        ▼
        ┌───────────────────────────────────┐   ST8A
        │           Set standby time           │
        └───────────────────────────────────┘
                        │
                        ▼
        ┌───────────────────────────────────────────┐   ST9A
        │  Change position of laser nozzle to standby position  │
        └───────────────────────────────────────────┘
                        │
                        ▼
              ╱ Elapsed time ≧ Standby time ╲   ST10
             ╱                              ╲───── NO
              ╲                            ╱
                        │ YES
                        ▼
        ┌───────────────────────────────────┐   ST23
        │    Move laser nozzle to restart position │
        └───────────────────────────────────┘
                        │
                        ▼
        ┌───────────────────────────────────┐   ST12
        │        Restart laser oscillator      │
        └───────────────────────────────────┘
                        │
                        ▼
        ┌───────────────────────────────────────────┐   ST24
        │  Move laser nozzle to target resuming position  │
        └───────────────────────────────────────────┘
                        │
                        ▼
                    ( END )
```

FIG. 14

FIG. 15

## INTERNATIONAL SEARCH REPORT

| International application No. |
| --- |
| **PCT/JP2023/046693** |

| A. | CLASSIFICATION OF SUBJECT MATTER |
| --- | --- |

***B23K 26/00***(2014.01)i
FI: B23K26/00 N

According to International Patent Classification (IPC) or to both national classification and IPC

| B. | FIELDS SEARCHED |
| --- | --- |

Minimum documentation searched (classification system followed by classification symbols)

B23K26/00-26/70

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2006-88163 A (FANUC CORPORATION) 06 April 2006 (2006-04-06) paragraphs [0031]-[0081], fig. 1-5 | 1, 13-15 |
| Y | | 2-5, 12 |
| A | | 6-11 |
| Y | JP 2000-202677 A (MITSUBISHI HEAVY INDUSTRIES, LTD.) 25 July 2000 (2000-07-25) paragraph [0019], fig. 1-2 | 2-5, 12 |
| Y | JP 2002-210577 A (AMADA ENG CENTER CO., LTD.) 30 July 2002 (2002-07-30) paragraphs [0036]-[0037], [0042], fig. 1, 4 | 2-5, 12 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **28 February 2024** | **12 March 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

INTERNATIONAL SEARCH REPORT
Information on patent family members

International application No.

**PCT/JP2023/046693**

| Patent document cited in search report | | | Publication date (day/month/year) | Patent family member(s) | | | Publication date (day/month/year) |
|---|---|---|---|---|---|---|---|
| JP | 2006-88163 | A | 06 April 2006 | US | 2006/0060571 | A1 | |
| | | | | paragraphs [0064]-[0115], fig. 1-5b | | | |
| | | | | EP | 1637272 | A1 | |
| | | | | CN | 1751836 | A | |
| JP | 2000-202677 | A | 25 July 2000 | (Family: none) | | | |
| JP | 2002-210577 | A | 30 July 2002 | (Family: none) | | | |

Form PCT/ISA/210 (patent family annex) (July 2022)

## REFERENCES CITED IN THE DESCRIPTION

**Patent documents cited in the description**

- JP H02006185 U
- JP 4812172 B
- US 2004159643 A